# EUROPÄISCHE PATENTANMELDUNG

(11) **EP 4 663 336 A1**
(43) Veröffentlichungstag der Anmeldung: **17.12.2025**
(21) Anmeldenummer: 25168204.3
(22) Anmeldetag: 03.04.2025
(51) Int. Cl.: B23K 26/361, B23K 26/364, B23K 26/38, B23K 26/60

(54) **VERFAHREN UND VORRICHTUNGEN ZUM SCHNEIDEN UND REINIGEN EINES ELEKTRODENSUBSTRATS**

(30) Priorität: 13.12.2024 EP 24219841
(71) Anmelder: Grob-Werke GmbH & Co. KG, 87719 Mindelheim (DE)
(72) Erfinder: Wang, Haixu, 87746 Erkheim (DE); Jäger, Andreas, 87719 Mindelheim (DE); Wagner, Sebastian, 86476 Neuburg a.d. Kammel (DE)
(74) Vertreter: KASTEL Patentanwälte PartG mbB

(57) **Zusammenfassung**

Um die Herstellung von Elektroden in Großserienfertigung hinsichtlich Aufwands, Qualität, Zuverlässigkeit und Geschwindigkeit zu verbessern, schlägt die Erfindung ein Strahlschneidverfahren zum Schneiden eines Elektrodensubstrats (12) vor, das den Schritt umfasst:
a) Schneiden des Elektrodensubstrats (12) durch Führen eines Schneidstrahls (14) entlang einer Schnittlinie (18), um das Elektrodensubstrat (12) durch Materialablation ganz oder teilweise zu durchtrennen und so eine erste und zweite Schnittkante (52, 54) zu erzeugen, wobei das Strahlschneidverfahren weiter wenigstens einen der Schritte umfasst:
b) Reinigen des Elektrodensubstrats (12) durch Abfahren eines sich entlang wenigstens einer der Schneidkanten (52, 54) erstreckenden Schneidkantenbereichs (56) mittels eines Reinigungsstrahls (26), der dazu ausgebildet und eingestellt ist, beim Schneiden auftretenden Materialaufwurf (28) durch Materialablation zu entfernen, und/oder
c) Vorreinigen des Elektrodensubstrats (12) vor Schritt a) durch Abfahren eines sich entlang der Schnittlinie (18) erstreckenden Vorreinigungsbereichs (58) mittels des Reinigungsstrahls (26), der dazu ausgebildet und eingestellt ist, Material durch Materialablation zu entfernen, um entlang der Schnittlinie (18) eine Vertiefung (60) zu erzeugen, in der in Schritt a) das Schneiden durchgeführt wird.

## Beschreibung

Die Erfindung betrifft ein Strahlschneidverfahren zum Schneiden eines Elektrodensubstrats. Weiter betrifft die Erfindung ein Batterieelektrodenherstellverfahren zum Herstellen von Elektroden für Batterien unter Einsatz eines solchen Strahlschneidverfahrens. Weiter betrifft die Erfindung Vorrichtungen und Anlagen zum Durchführen einiger oder aller Schritte des Schneidverfahrens. Weiter betrifft die Erfindung ein Computerprogramm mit Anweisungen zum Durchführen des Strahlschneidverfahrens.

Zum technologischen Hintergrund und zum Stand der Technik wird auf folgende Literaturstellen verwiesen:
[1] WO 2020/192845 A1
[2] WO 2023/47242 A1
[3] EP 4 456 225 A1

Aus den Literaturstellen [1] bis [3] ist jeweils ein Strahlschneidverfahren zum Schneiden eines Elektrodensubstrats mit dem Schritt Schneiden des Elektrodensubstrats durch Führen eines Schneidstrahls entlang einer Schnittlinie, um das Elektrodensubstrat durch Materialablation ganz oder teilweise zu durchtrennen und so eine erste und zweite Schnittkante zu erzeugen, bekannt. In [3] ist auch ein nach einem Schneiden an anderer Stelle erfolgendes Reinigen eines von einem bahnförmigen Elektrodensubstrat abgeschnittenen Elektrodensegments erwähnt.

Die Erfindung hat sich zur Aufgabe gestellt, das Schneiden von Elektrodensubstraten für eine Großserienfertigung von Batterien oder dergleichen zu verbessern.

Zum Lösen dieser Aufgabe schafft die Erfindung das Strahlschneidverfahren nach Anspruch 1. Ein Batterieelektrodenherstellverfahren zum Herstellen von Elektroden für Batterien unter Einsatz eines solchen Strahlschneidverfahrens sowie Vorrichtungen zur Durchführung zumindest einiger Schritte des Strahlschneidverfahrens und ein Computerprogramm mit Anweisungen zum Durchführen des Strahlschneidverfahrens sind Gegenstand der Nebenansprüche.

Vorteilhafte Ausgestaltungen sind Gegenstand der Unteransprüche.

Die Erfindung schafft gemäß einem ersten Aspekt davon ein Strahlschneidverfahren zum Schneiden eines Elektrodensubstrats, umfassend:
a) Schneiden des Elektrodensubstrats durch Führen eines Schneidstrahls entlang einer Schnittlinie, um das Elektrodensubstrat durch Materialablation ganz oder teilweise zu durchtrennen und so eine erste und zweite Schnittkante zu erzeugen und
b) Reinigen des Elektrodensubstrats durch Abfahren eines sich entlang wenigstens einer der Schneidkanten erstreckenden Schneidkantenbereichs mittels eines Reinigungsstrahls, der dazu ausgebildet und eingestellt ist, beim Schneiden auftretenden Materialaufwurf durch Materialablation zu entfernen.

Gemäß einer Alternative schafft die Erfindung Strahlschneidverfahren zum Schneiden eines Elektrodensubstrats, umfassend:
a) Schneiden des Elektrodensubstrats durch Führen eines Schneidstrahls entlang einer Schnittlinie, um das Elektrodensubstrat durch Materialablation ganz oder teilweise zu durchtrennen und so eine erste und zweite Schnittkante zu erzeugen und
c) Vorreinigen des Elektrodensubstrats vor Schritt a) durch Abfahren eines sich entlang der Schnittlinie erstreckenden Vorreinigungsbereichs mittels des Reinigungsstrahls, der dazu ausgebildet und eingestellt ist, Material durch Materialablation zu entfernen, um entlang der Schnittlinie eine Vertiefung zu erzeugen, in der in Schritt a) das Schneiden durchgeführt wird.

Der Begriff "Elektrodensubstrat" umfasst hierbei zumindest, aber nicht ausschließlich, eine Kombination aus einem Aktivmaterial und einer Trägerfolie, wobei das Aktivmaterial auf zumindest einer Seite (oder beiden Seiten) der Trägerfolie aufgebracht ist. Man kann auch sagen, dass die Trägerfolie einseitig oder beidseitig mit dem Aktivmaterial beschichtet ist. Dabei kann das Elektrodensubstrat Kathodenmaterial oder Anodenmaterial aufweisen.

Bei bevorzugten Ausführungen dieser zweiten Alternative wird vor dem ersten Schneidvorgang, zumindest eine defokussierte Reinigungsfahrt durchgeführt, um so eine Vertiefung, wie eine Rille, zu erzeugen, in der dann anschließend der Schneidvorgang ausgeführt wird. Ein Vorteil dieser Ausführungen ist, dass die durch den Schneidvorgang erzeugte Materialablation sich in dieser Vertiefung ablagert, und insbesondere nicht über die Elektrodensubstratoberfläche hinausragt, und somit hier nicht entfernt werden muss. Der Schneidvorgang kann als einzelner Trennschnitt ausgeführt werden. Es ist aber auch hierbei denkbar, dass das Material durch mehrere Schneidvorgänge nach und nach durchtrennt wird. Optional können zwischen diesen Schneidvorgängen auch Reinigungsfahrten durchgeführt werden - der Idealfall hier wäre allerdings, dass dies nicht erforderlich ist.

Hier ist zu beachten, dass die Vorreinigung, also das Reinigen vor dem Schneiden, auch mit nichtdefokussierten Reinigungsfahren durchgeführt werden kann, z.B. indem mehrere nichtdefokussierte Reinigungsüberfahrten zueinander versetzt durchgeführt werden.

Bei einigen Ausführungsformen des Schneidverfahrens ist sowohl Schritt b) als auch Schritt c) vorgesehen.

Bei der Schnittlinie kann es sich um eine, insbesondere vordefinierte Schnittkontur handeln.

Unter Materialablation wird sowohl das Aufschmelzen von Material als auch das Verdampfen von Material verstanden. Demgemäß kann als Reinigungsstrahl wie auch als Schneidstrahl jegliche Strahlung verwendet werden, die zu einer solchen Materialablation geeignet ist. Neben den im Folgenden als Beispiel erläuterten Laserstrahlen kommen auch andere Strahlen, wie z.B. Elektronenstrahlen in Frage.

Unter Materialaufwurf werden insbesondere Partikel eines durch das Trennverfahren aufgeschmolzenem und/oder hochgewirbelten Materials oder eine Ansammlung von durch das Trennverfahren aufgeschmolzenem und/oder hochgewirbeltem Material verstanden.

Der Trennschnitt muss nicht auf einmal durchgeführt werden, sondern kann auch durch mehrere Teilschnitte, mit denen das Material durch wiederholtes Schneiden nach und nach geschnitten wird, bis es durchgeschnitten ist, ausgeführt werden. Hierbei ist bei einigen Ausgestaltungen vorgesehen, dass zwischen den Teilschnitten gereinigt wird.

Demnach kann der Schneidvorgang auch ein teilweises Durchtrennen des Materials sein.

Das Schneiden kann demnach ein Durchschneiden sein, so dass das Elektrodensubstrat durch den Schneidstrahl gleich vollständig durchtrennt wird. Das Schneiden kann aber auch derart erfolgen, dass zunächst nur teilweise, insbesondere bis zu einer Teilhöhe und/oder über eine Teilstrecke, geschnitten wird, wobei dann ein Reinigen erfolgen kann, bevor wiederrum weiter geschnitten wird, also beispielsweise durchtrennt wird oder bis zur nächsten Teilhöhe oder über die nächste Teilstrecke geschnitten wird.

Bei einigen Ausführungsformen ist vorgesehen, dass der Schneidstrahl und/oder der Reinigungsstrahl mittels zumindest eines Lasers erzeugt werden.

Bei einigen Ausführungsformen ist vorgesehen, dass das Führen und/oder das Abfahren mittels eines oder mehrerer Laserscanner erfolgen.

Bei einigen Ausführungsformen ist vorgesehen, dass der Schneidstrahl und der Reinigungsstrahl mittels derselben Strahlquelle erzeugt werden. Hierbei kann der von der Strahlquelle erzeugte Laserstrahl dann entweder als Schneidstrahl oder als Reinigungsstrahl verwendet werden. Alternativ ist es möglich, den von der Strahlquelle erzeugten Laserstrahl mittels Optiken in zwei Teil-Laserstrahlen zu teilen, sodass der eine Laserstrahl (im Wesentlichen etwa zeitgleich) sowohl als Schneidstrahl als auch als Reinigungsstrahl dient.

Bei einigen Ausführungsformen ist vorgesehen, dass der Schneidstrahl mittels einer ersten Strahlquelle erzeugt wird und der Reinigungsstrahl mit einer zweiten Strahlquelle erzeugt wird.

Es können auch eine erste und eine zweite Strahlquelle vorgesehen sein, die wahlweise den Schneidstrahl oder den Reinigungsstrahl erzeugen, wobei der Betrieb des Schneidens und des Reinigens auch wechseln kann.

Bei einigen Ausführungsformen ist vorgesehen, dass wenigstens eine erste Strahlquelle und eine zweite Strahlquelle derart betrieben werden, dass die erste und zweite Strahlquelle wechselweise den Schneidstrahl und den Reinigungsstrahl erzeugen.

Bei einigen Ausführungsformen ist vorgesehen, dass die erste und die zweite Strahlquelle jeweils sowohl den Schneidstrahl und den Reinigungsstrahl, z.B. immer abwechselnd oder periodisch abwechselnd, erzeugen.

Der Betrieb kann auch derart sein, dass eine von den beiden Strahlquellen den Schneidstrahl erzeugt und die andere der beiden Quellen den Reinigungsstrahl erzeugt, und dass diese das abwechselnd durchführen, d.h., wenn Schneidstrahlquelle an, dann Reinigungsstrahlquelle aus und wenn Reinigungsstrahlquelle an, dann Schneidstrahlquelle aus. Es kann aber auch eine zeitliche Überlappung stattfinden.

Bei einigen Ausführungsformen ist vorgesehen, dass in der Zeit, in der Schritt a) mit der ersten Strahlquelle durchgeführt wird, die zweite Strahlquelle zum Durchführen von Schritt b) eingestellt und/oder positioniert wird.

Bei einigen Ausführungsformen ist vorgesehen, dass die Schritte a) und b) zeitlich überlappend durchgeführt werden.

Bei einigen Ausführungsformen ist vorgesehen, dass in der Zeit, in der Schritt c) mit der zweiten Strahlquelle durchgeführt wird, die erste Strahlquelle zum Durchführen von Schritt a) eingestellt und/oder positioniert wird.

Bei einigen Ausführungsformen ist vorgesehen, dass die Schritte c) und a) zeitlich überlappend durchgeführt werden.

Bei einigen Ausführungsformen umfasst Schritt b) den Schritt:
b1) Führen des Reinigungsstrahls versetzt zu der wenigstens einen Schneidkante, entlang der sich der Schneidkantenbereich erstreckt.

Bei einigen Ausführungsformen umfasst Schritt b) den Schritt:
b2) Richten des Reinigungsstrahls auf den Schneidkantenbereich mit einer Fokuslage, die relativ zu der Fokuslage des Schneidstrahls in Strahlrichtung verschoben ist.

Bei einigen Ausführungsformen umfasst Schritt b) den Schritt:
b3) mehrfaches Überfahren des Schneidkantenbereichs mit dem Reinigungsstrahl.

Dabei muss das mehrfache Überfahren zum Reinigen nicht zwingend am Ende des Schneidvorganges erfolgen, das Reinigen könnte auch zwischendurch, wenn ein Teil geschnitten worden ist, erfolgen.

Bei einigen Ausführungsformen ist vorgesehen, dass das Reinigen zwischendurch ausgeführt wird. Bei einigen Ausführungsformen wird der Trennschnitt durch mehrere Schneidvorgänge ausgeführt, wobei zwischen Schneidvorgängen Reinigungsfahrten durchgeführt werden.

Bei einigen Ausführungsformen ist vorgesehen, dass das mehrfache Überfahren, unabhängig davon, ob es am Ende direkt aufeinanderfolgend ausgeführt wird, oder zwischen den Schneidvorgängen für den Trennschnitt, auch mit unterschiedlichem Versatz zum Schneidkantenbereich durchgeführt wird. Auch können bei dem mehrfachen Überfahren unterschiedliche Fokuslagen eingestellt werden.

Bei einigen Ausführungsformen umfasst Schritt c) den Schritt:
c1) Führen des Reinigungsstrahls entlang der Schnittlinie.

Bei einigen Ausführungsformen umfasst Schritt c) den Schritt:
c2) Richten des Reinigungsstrahls auf den Vorreinigungsbereich mit einer Fokuslage, die relativ zu der Fokuslage des Schneidstrahls in Strahlrichtung verschoben ist.

Bei einigen Ausführungsformen umfasst Schritt c) den Schritt:
c3) mehrfaches Überfahren des Vorreinigungsbereichs mit dem Reinigungsstrahl.

Das mehrfache Überfahren kann auch beim Vorreinigen zwischen unterschiedlichen Schneidvorgängen des Trennschnitts erfolgen. Auch kann das mehrfache Überfahren auch beim Vorreinigen mit unterschiedlichem Versatz und/oder mit unterschiedlicher Fokuslage erfolgen.

Bei einigen Ausführungsformen umfasst Schritt b) den Schritt:
b4) Abfahren eines mit Aktivmaterial beschichteten Bereichs des Elektrodensubstrats.

Bei einigen Ausführungsformen umfasst Schritt b) den Schritt:
b5) Abfahren eines unbeschichteten Trägerfolienbereichs des Elektrodensubstrats;

Beispielsweise kann in Schritt a) aus einem unbeschichteten Randbereich der Trägerfolie eine Ableiterfahne ausgeschnitten werden. Schritt b) kann dann auch zum Reinigen des unbeschichteten Bereichs der Trägerfolie durchgeführt werden.

Bei einigen Ausführungsformen umfasst Schritt b) den Schritt:
b6.1) Durchführen der Reinigung ohne nachgelagerte Reinigungseinheiten.

Bei einigen Ausführungsformen ist zusätzlich zu einem Schneiden mittels einer Schneidvorrichtung (ohne darin integrierte Reinigungsvorrichtung) lediglich eine Reinigung mittels einer separat vorgesehenen Reinigungsvorrichtung gemäß dem unten näher erläuterten weiteren Aspekt vorgesehen, die Reinigung wird aber ohne weitere nachgelagerte Reinigungseinheit durchgeführt.

Bei einigen Ausführungsformen umfasst Schritt b) den Schritt:
b6.2) Durchführen der Reinigung ohne zusätzliche Reinigungsschritte.

Bei einigen Ausführungsformen umfasst Schritt b) den Schritt:
b6.3) Durchführen der Reinigung ohne mechanische Reinigungseinheiten oder Reinigungsbürsten.

Bei einigen Ausführungsformen umfasst Schritt c) den Schritt:
c4) Abfahren eines mit Aktivmaterial beschichteten Bereichs des Elektrodensubstrats.

Bei einigen Ausführungsformen umfasst Schritt c) den Schritt:
c5) Abfahren eines unbeschichteten Trägerfolienbereichs des Elektrodensubstrats.

Dies erfolgt beispielsweise beim Schneiden von Ableiterfahnen oder dergleichen wie oben zu Ausführungen für Schritt b) beschrieben.

Bei einigen Ausführungsformen umfasst Schritt c) den Schritt:
c6.1) Durchführen der Reinigung ohne nachgelagerte Reinigungseinheiten.

Bei einigen Ausführungsformen ist zusätzlich zu einem Schneiden mittels einer Schneidvorrichtung (ohne darin integrierte Reinigungsvorrichtung) zum Durchführen von Schritt c) lediglich eine (Vor-)Reinigung mittels einer separat vorgesehenen Reinigungsvorrichtung gemäß dem unten näher erläuterten, weiteren Aspekt vorgesehen, die Reinigung wird aber ohne weitere nachgelagerte Reinigungseinheit durchgeführt.

Bei einigen Ausführungsformen umfasst Schritt c) den Schritt:
c6.2) Durchführen der Reinigung ohne zusätzliche Reinigungsschritte.

Bei einigen Ausführungsformen umfasst Schritt c) den Schritt:
c6.3) Durchführen der Reinigung ohne mechanische Reinigungseinheiten oder Reinigungsbürsten.

Bei einigen Ausführungsformen umfasst Schritt b) den Schritt:
b7) Entgraten des Schnittkantenbereichs.

Bei einigen Ausführungsformen umfasst Schritt b) den Schritt:
b8) Erzeugen einer abgeschrägten Schnittkante.

Bei einigen Ausführungsformen umfasst Schritt c) den Schritt:
c7) Erzeugen einer abgerundeten Rille als Vertiefung.

Bei einigen Ausführungsformen umfasst Schritt c) den Schritt:
c8) Erzeugen einer Rille mit abgeschrägten Seitenwänden als Vertiefung.

Gemäß einem weiteren Aspekt schafft die Erfindung ein Batterieelektrodenherstellverfahren zum Herstellen von Elektroden für Batterien, umfassend
1) Bereitstellen eines Elektrodensubstrats und
2) Vereinzeln der Elektroden von dem Elektrodensubstrat durch das Strahlschneidverfahren nach einer der voranstehenden Ausgestaltungen.

Die Erfindung schafft gemäß einem weiteren Aspekt auch eine Vorrichtung, die zum Durchführen von Schritt b), Schritt c) oder des Schneidverfahrens insgesamt eingerichtet sind. Gemäß einer Alternative ist eine Reinigungsvorrichtung zum Durchführen von Schritt b) und/oder c) im Zuge des Schneidens eines Elektrodensubstrats vorgesehen. Die Reinigungsvorrichtung kann separat von der Schneidvorrichtung vorgesehen sein oder in eine Schneidvorrichtung integriert sein. Gemäß einer anderen Alternative werden die Schritte des Schneidens und des Reinigens durch eine Strahlschneidvorrichtung durchgeführt. Diese unterschiedlichen alternativen Lösungen der Aufgabe eines verbesserten Reinigens im Zuge des Schneidens von Elektrodensubstrat sind zweckmäßig in den mehreren unabhängigen Vorrichtungsansprüchen angegeben.

Gemäß einer ersten Alternative zur Vorrichtung schafft die Erfindung eine Reinigungsvorrichtung zum Reinigen eines sich entlang einer Schnittlinie erstreckenden Schneidbereichs vor, während und/oder nach Durchführen eines Schneidvorganges an einem Elektrodensubstrat, umfassend wenigstens eine Strahlquelle, die dazu eingerichtet ist, einen Reinigungsstrahl derart über den Schneidbereich zu führen, dass Materialaufwurf im Schneidbereich durch Materialablation gezielt entfernt oder vermieden wird.

Der Begriff "Schneidbereich" umfasst hierbei zumindest, aber nicht ausschließlich, einen Bereich, der durch die Bearbeitung verändert wird bzw. wurde, z.B. durch Materialauftrag, Materialabtrag oder durch thermische Beeinflussung.

Wie oben zu Schritt c) erläutert, kann die Reinigungsvorrichtung dazu eingerichtet sein, eine erste Reinigungsfahrt auch bereits vor dem ersten Schneidprozess durchzuführen. Bei einigen Ausführungsformen ist die Reinigungsvorrichtung dazu eingerichtet, nach dem (ersten oder weiteren) Schneidprozess, den beim Schneiden entstandenen Schneidkantenbereich (Beispiel für Schneidbereich) zu reinigen, indem Materialaufwurf durch Materialablation gezielt entfernt wird.

Die Reinigungsvorrichtung kann auch zusammen mit anders als mit Strahlschneiden funktionierenden Schneidvorrichtungen zusammenwirken. Die Reinigungsvorrichtung ist auch in Kombination mit anderen, insbesondere mechanisch durchgeführten, Schneidprozessen/- vorrichtungen kombinierbar.

Bei einigen Ausführungsformen der Reinigungsvorrichtung ist vorgesehen, dass die Strahlquelle einen Laser oder einen Laser mit Laserscanner umfasst.

Bei einigen Ausführungsformen der Reinigungsvorrichtung ist vorgesehen, dass die Strahlquelle ein Strahlformungssystem aufweist, mittels dem die Energie des Strahls pro Flächeneinheit einstellbar ist. Beispielsweise kann das Strahlformungssystem einen Strahlaufweiter und/oder einen Beamshaper und/oder einen Strahlteiler umfassen. Unter Strahlformung kann insbesondere, aber nicht ausschließlich ein Prozess verstanden werden, bei dem die Form und Intensitätsverteilung eines Laserstrahls gezielt verändert wird, um die Energieeffizienz und -dichte an einem bestimmten Ort oder in einem bestimmten Bereich zu optimieren.

Bei einigen Ausführungsformen der Reinigungsvorrichtung ist eine Steuerung vorgesehen, die dazu eingerichtet ist, die Strahlquelle zum Durchführen von Schritt b) und/oder von Schritt c) des Schneidverfahrens nach einer der voranstehenden Ausgestaltungen zu steuern.

Als alternative Vorrichtung schafft die Erfindung eine Strahlschneidvorrichtung zum Schneiden eines Elektrodensubstrats mittels eines Schneidstrahls, umfassend:
wenigstens eine Strahlquelle, die dazu ausgebildet ist, einen zur Materialablation eingerichteten Strahl über das Elektrodensubstrat zu führen, und
eine Steuerung, die dazu eingerichtet ist, die wenigstens eine Strahlquelle zum Durchführen des Strahlschneidverfahrens nach einer der voranstehenden Ausgestaltungen zu steuern.

Vorzugsweise weist die Strahlschneidvorrichtung eine Reinigungsvorrichtung nach einer der voranstehenden Ausgestaltungen auf.

Bei einigen Ausführungsformen der Strahlschneidvorrichtung ist vorgesehen, dass die wenigstens eine Strahlquelle wenigstens einen Laser zum Erzeugen eines Laserstrahls und wenigstens einen Scanner zum Leiten des Laserstrahls über das Elektrodensubstrats umfasst.

Bei einigen Ausführungsformen der Strahlschneidvorrichtung sind eine erste und eine zweite Strahlquelle vorgesehen, die unabhängig voneinander einstellbar und steuerbar sind.

Bei einigen Ausführungsformen der Strahlschneidvorrichtung ist ein Strahlformungssystem vorgesehen, das dazu eingerichtet ist, einen in das Strahlformungssystem eingeleiteten Strahl in zwei oder mehr Strahlen zur Materialablation aufzuteilen, die in ihren Parametern, im Fokusdurchmesser und/oder deren Strahlrichtung unabhängig voneinander einstellbar sind.

Bei einigen Ausführungsformen der Strahlschneidvorrichtung oder der Reinigungsvorrichtung ist eine Absaugeinrichtung vorgesehen, die zum Absaugen von sich beim Schneiden oder Reinigen lösenden Materials eingerichtet ist.

Gemäß einem weiteren Aspekt schafft die Erfindung ein Computerprogramm, umfassend Anweisungen, die eine Strahlschneidvorrichtung nach einer der voranstehenden Ausgestaltungen dazu veranlasst, das Strahlschneidverfahren nach einer der oben erwähnten Ausführungen durchzuführen.

Bei einigen Ausführungsformen ist eine Absaugeinrichtung im Bearbeitungsbereich (beim Schneiden und/oder beim Reinigen) vorgesehen, die sich durch die jeweilige Bearbeitung lösendes Material absaugt.

Im Folgenden werden Effekte und Vorteile einiger Ausführungsformen der Erfindung näher erläutert.

Einige Ausführungsformen sehen eine Reinigungsüberfahrt für Elektroden vor.

Ausgestaltungen der Erfindung liegen insbesondere im technischen Umfeld
- der Fertigung von Batteriezellen und/oder
- der Vereinzelung bei der Elektrodenfertigung und Zell-Assemblierung.

Eine Vereinzelung von Elektrodenfolien - z.B. Heraustrennen / -schneiden von einzelnen Elektrodenstücken aus dem Elektrodenbandmaterial - findet entweder mechanisch oder mit Strahlschneiden wie insbesondere Laser statt.

Beim Trennen mit Laser werden in der Regel eine Laserquelle und ein Laserscanner, für die Strahlablenkung (= Richtungsänderung des Laserstrahls), verwendet. Zusätzlich kann ein Strahlaufweiter verwendet werden, um den Eingangsstrahldurchmesser am Scanner anzupassen (= vergrößern und/oder verkleinern).

Bei allen genannten Verfahren zum Trennen bzw. Schneiden des Elektrodenbandmaterials kann ein Materialaufwurf (= Partikel oder Ansammlung von durch das Trennverfahren aufgeschmolzenem und/oder hochgewirbelten Materials) entlang der Schnittkante auftreten. Dieser Materialaufwurf wird auch als "Grat", "Grat in Z-Richtung" bzw. "Lokale Materialerhöhung" bezeichnet. Dieser Materialaufwurf kann kontinuierlich und/oder als Materialspritzer/Partikel im Bereich der Schnittkante auftreten und ist teilweise fest mit dem Grundmaterial (z.B. eine Beschichtung der Trägerfolie, insbesondere das Aktivmaterial) verbunden. Das bedeutet, dass der Materialaufwurf nur sehr schwierig von dem Grundmaterial zu lösen ist, ohne das Grundmaterial dabei zu beschädigen.

Um einen Materialaufwurf auf der ursprünglichen Elektrodensubstratoberfläche bei der Vereinzelung zu reduzieren oder gar zu kompensieren, gibt es grundsätzlich drei Möglichkeiten:
- Entstehung des Materialaufwurfs verhindern;
- Reinigen (= Entfernen des Materialaufwurfs) des geschnittenen Materials;
- Erzeugung einer Vertiefung und Materialaufwurf nur in dieser Vertiefung unterhalb der ursprünglichen Elektrodensubstratoberfläche zulassen.

Zunächst kann die Entstehung eines Materialaufwurfs durch eine Optimierung der Prozessparameter, wie bspw. Laserleistung, Scangeschwindigkeit (= Bewegungsgeschwindigkeit des Lasers über die Oberfläche) etc. reduziert werden. Aufgrund sehr strenger Kundenanforderungen, wie bspw. geforderte Taktzeiten, möglichst geringe Separatordicke, Schnittkanten möglichst ohne Materialaufwurf, stößt die Prozessoptimierung an ihre Grenzen.

Zusätzlich oder alternativ kann ein Reinigungssystem zur Reinigung des geschnittenen Materials, also vereinzelte Elektrodenstücke und/oder das Elektrodenbandmaterial, in der Anlage verbaut werden, um den durch das Schneiden erzeugten Materialaufwurf von dem Grundmaterial abzureinigen (= zu entfernen). Solche Reinigungssysteme erfordern zusätzlichen Bauraum in der Anlage und sind in der Regel wartungsintensiv, was zu häufigen und/oder längeren Stillstandzeiten der Anlage führt. Darüber hinaus können die bekannten Systeme nur lose (=nicht mit dem Grundmaterial fest verbunden) Partikel bzw. losen Materialaufwurf entfernen. Mit keinem der verfügbaren Systeme ist es möglich, einen fest anhaftenden Materialauftrag in ausreichender Qualität (= möglichst vollständig und/oder möglichst beschädigungsarm, insbesondere beschädigungsfrei, für das Grundmaterial) zu entfernen.

Um einen möglichst niedrigen und/oder geringen Materialaufwurf zu generieren, können die Prozessparameter sowie die Schnittstrategie je nach Material und Maschine individuell angepasst werden. Bei der Schneidstrategie werden zum Durchführen des Trennschnitts grundsätzlich die Einfach- und die Mehrfachüberfahrt unterschieden. Hierbei wird lediglich die Anzahl an Überfahrten variiert, die Position der Überfahrt bleibt jeweils gleich.

Ein Materialaufwurf ist enorm kritisch für die Funktionsfähigkeit der Batteriezelle. Bei einer Assemblierung, wie bspw. einem Laminationsprozess, durch die die Lagen miteinander verbunden werden, wird kontinuierlich über die komplette Elektrodenfläche ein Druck aufgebaut bzw. ausgeübt, um die Elektrode mit einem Separator zu verbinden. Hierbei ist eine möglichst glatte Oberfläche von Elektrode und Separator erwünscht, um eine gleichmäßige Assemblierung zu gewährleisten. Ein lokaler Materialaufwurf, also Spritzer und Partikel, die über die Elektrodenoberfläche hinausragen, werden der der Assemblierung, z.B. bei der Lamination, d.h. sobald die Elektrode auf den Separator gepresst wird, in den Separator hineingedrückt. Der Separator kann hierdurch lokal beschädigt werden und je nach Dicke des Separators, Höhe bzw. Größe des Materialaufwurfs und/oder Druck, der zur Assemblierung der beiden Schichten auf diese ausgeübt wird, sogar durchstoßen werden. Kathode und Anode sind dadurch in der späteren Batteriezelle unter Umständen nicht mehr vollflächig voneinander getrennt. Die Folge wäre ein Kurzschluss der Batteriezelle und damit ein Funktionsverlust der Batterie.

Aufgrund der vorstehend beschriebenen Problematik soll ein Materialaufwurf nach dem Trennschnitt reduziert oder gar verhindert werden. Bisher eingesetzte Systeme bieten hier derzeit nur Lösungen an, mit denen eine Reduzierung und/oder Entfernung des Materialaufwurfs nicht in ausreichend hoher Güte möglich ist.

Das heißt, ein verbessertes Verfahren zur Reinigung des Grundmaterials nach dem Schneiden soll zuverlässig sein, das Aktivmaterial wenig, insbesondere gar nicht, beschädigen, und/oder soll in einem breiten Bereich (= nicht nur direkt an der Schnittkante, sondern auch mit einem vorbestimmten Abstand zur Schnittkante) einsetzbar sein.

Hierbei gibt es einige Herausforderungen:
- Identifikation der Position des Materialaufwurfs und anschließende Positionierung der Reinigungsüberfahrt.
- Intensität bzw. Parameter der Reinigungsüberfahrt festlegen.
- Anzahl der Reinigungsüberfahrten.
- Bewertung des Reinigungsergebnisses.
- Vermeiden der Generierung einer zweiten Schnittkante (z.B. durch zu hohe Intensität des Lasers)

Bei einigen Ausführungsformen dieser Erfindung wird ein Lasersystem zur Reinigung des Grundmaterials, z.B. im Bereich einer durch einen Schnitt erzeugten Schnittkante, dazu genutzt, den entstandenen Materialaufwurf an der Schnittkante durch Reinigungsüberfahrten abzutragen. Diese sogenannten Reinigungsüberfahrten reduzieren den Materialauftrag nach der Entstehung. Bei bevorzugten Ausgestaltungen wird dasselbe Lasersystem, das zum Schneiden des Elektrodenbandmaterials eingesetzt wird, auch zum Reinigen der Schnittkante bzw. des Schnittkantenbereichs eingesetzt. Das bedeutet, dasselbe Lasersystem führt zusätzlich zu den für den Trennschnitt erforderlichen Überfahrten weitere Überfahrten, sogenannte Reinigungsüberfahrten, aus, um den Materialaufwurf abzutragen bzw. zu entfernen. Bei einigen Ausführungsformen kommen dabei im Wesentlichen zwei Strategien zum Einsatz:
- Verschiebung der Reinigungsüberfahrten in Bezug auf die tatsächliche Schnittkante (Versatz) und/oder
- Verschiebung der Fokuslage des Laserstrahls, um den Fokusdurchmesser (= kleinster Strahldurchmesser) für die Reinigung zu verschieben (Fokuslagenverschiebung). Insbesondere, aber nicht ausschließlich kann die Fokuslagenverschiebung genutzt werden, einen Strahldurchmesser des Lasers, der auf das Elektrodenbandmaterial, insbesondere die ursprüngliche Elektrodensubstratoberfläche, trifft, zu vergrößern. So kann zum einen das Abreinigen eines breiteren Bereichs oder der linken und rechten Schnittkante in einem Prozessschritt durchgeführt werden, und zum anderen wird so die Intensität des auf das Elektrodenbandmaterial treffenden Laserstrahls reduziert.

Die Fokuslage entspricht der Position, an der der erzeugte Laserstrahl den kleinsten Strahldurchmesser hat. Daher wird der kleinste Strahldurchmesser auch als Fokus- oder Fokuslagendurchmesser bezeichnet. Die Position der Fokuslage relativ zum Elektrodenmaterial, d.h. der Abstand zwischen Fokuslage und Elektrodenmaterialoberfläche, und die Laserparameter, wie bspw. Fokusdurchmesser, Laserleistung, Scangeschwindigkeit, kontinuierliche oder gepulste Laserstrahlung, beeinflussen zum einen die Breite und Form des Schnittspalts, sowie die Qualität der Schnittkante, und zum anderen die Qualität der Abreinigung.

Beide Strategien können jeweils alleinstehend oder in beliebiger Art- und Weise miteinander kombiniert verwendet werden, um den Effekt der Reinigung, wie bspw. Reinigungsgrad, Reinigungsqualität, etc., zu erhöhen. Die Anzahl der Reinigungsüberfahrten ist hierbei abhängig vom jeweiligen Prozess, d.h., von der eingesetzten Strategie zum Reinigen, und/oder vom Material zu wählen. Die vorstehend beschriebenen Strategien finden insbesondere Anwendung auf dem beschichteten Teil, also dem Teil der Trägerfolie, der mit einem Material, i.d.R. dem sogenannten Aktivmaterial, beschichtet ist, der Elektroden.

Es ist auch denkbar, die vorstehend beschriebenen Strategien zur Reinigung der Elektrodenoberfläche auf dem unbeschichteten Teil (= "nackte" Trägerfolie) zu verwenden. Dies ist insbesondere bei Trägerfolien mit einer Stärke größer als 15 µm denkbar.

Mit den vorgeschlagenen Verfahren gemäß Ausführungsbeispielen der Erfindung kann neben losem Aufwurf, also Partikel aus bspw. Folienschmelze und/oder Aktivmaterial (z.B. LFP, NMC, o.ä.), die auf der Elektrodenoberfläche liegen, jedoch nicht fest mit dieser verbunden sind, auch fest anhaftender Materialaufwurf, also Partikel aus bspw. Folienschmelze und/oder Aktivmaterial (z.B. LFP, NMC, o.ä.), die fest mit der Elektrodenoberfläche verbunden sind, insbesondere ohne zusätzliches Equipment, entfernt werden. Das bedeutet, zur Reinigung der Elektrodenoberfläche ist kein zusätzliches Reinigungssystem erforderlich; das Verfahren zur Reinigung kann insbesondere durch dasselbe Lasersystem ausgeführt werden, das zum Schneiden des Elektrodenbandmaterials verwendet wird.

Alternativ ist es auch denkbar, ein zweites, von dem für den Trennschnitt verwendeten Lasersystem separates Lasersystem für die Reinigung der Elektrodenoberfläche vorzusehen. Dies erfordert etwas mehr Bauraum (als nur ein Lasersystem), ist aber im Vergleich zu den bekannten Systemen dennoch bauraumsparend und einfach in die Anlage integrierbar. Insbesondere können durch den Einsatz zweier Lasersysteme die Taktzeiten weiter reduziert werden, da die Einstellungen der jeweiligen Lasersysteme für die für sie vorgesehene Funktion (Trennschnitt bzw. Reinigen) optimiert werden können. Darüber hinaus kann die Zeit, die das Lasersystem zum Schneiden des Elektrodenmaterial benötigt, dazu verwendet werden, das Lasersystem zur Reinigung entsprechend einzustellen und zu positionieren. Es ist sogar denkbar, die beiden Lasersysteme zumindest zeitweise gleichzeitig (mit einem zeitlichen Versatz) einzusetzen. Zum Beispiel startet das erste Lasersystem zum Schneiden des Elektrodenmaterials den Trennschnitt und mit einem vorbestimmten zeitlichen Versatz startet das zweite Lasersystem zum Reinigen der Elektrodenoberfläche die Reinigung im Bereich des bereits ausgeführten Trennschnitts.

Es kann auch ein Lasersystem oder dergleichen zur Reinigung zusätzlich zu einer Schneidvorrichtung vorgesehen sein, die auf andere Weise wirkt, z.B. zusätzlich zu einer mechanischen Schneidvorrichtung, z.B. mittels Messerschneiden oder dergleichen.

Darüber hinaus ist es auch denkbar, ein solches zeitweise überlappendes Schneid- und Reinigungsverfahren mit einem Lasersystem, das entweder zwei oder mehr Laserquellen oder ein Laserstrahlformungssystem aufweist, durchzuführen. Dabei ist das Laserstrahlformungssystem dazu eingerichtet, den von dem Lasersystem erzeugten Laserstrahl in zwei oder mehr Laserstrahlen aufzuteilen, die in ihren Parametern, wie bspw. Fokusdurchmesser unabhängig voneinander einstellbar sind.

Die gemäß Ausführungsformen der Erfindung durchgeführte Reinigung der Elektrodenoberfläche ist verschleißarm, insbesondere verschleißfrei, hinsichtlich der zu reinigenden Elektrodenoberfläche, und es ist bei einigen bevorzugten Ausgestaltungen kein zusätzliches Equipment erforderlich. Dies ermöglicht es, Trennen und Reinigen des Elektrodenmaterials bzw. der Elektrodenoberfläche in einem gemeinsamen Prozessschritt zur Herstellung einer Batteriezelle durchzuführen und somit auf einen Prozessschritt zur separaten Reinigung der Elektrodenoberfläche zu verzichten, wenn auf nachgelagerte Reinigungseinheit(en) bzw. Reinigungsschritte verzichtet wird.

Im Vergleich zu einem normalen klassischen Laserschneidprozess wird gemäß dem vorstehend beschriebenen Verfahren bei einigen Ausführungsformen nach dem Trennschnitt gezielt der Materialaufwurf auf der beschichteten Elektrodenoberfläche entfernt. Dadurch kann für den Trennschnitt zunächst ein Materialaufwurf "akzeptiert" werden. Die reinen Trennschnitt-Parameter müssen nicht auf einen minimalen Materialaufwurf ("Grat in Z") optimiert werden. So können beispielsweise kostengünstigere Lasersysteme eingesetzt werden, schnellere Schnittgeschwindigkeiten/ Bahngeschwindigkeiten erzielt werden und mit größeren Maschinentoleranzen hinsichtlich der Positionierung des zu vereinzelnden Materials gearbeitet werden.

Zusätzlich kann das Reinigen gemäß Ausführungsformen der Erfindung gezielt an einer definierten Stelle auf dem Bauteil verwendet werden. Somit ist keine Nachbearbeitung der gesamten Elektrodenfläche wie beispielsweise bei Bürstenlösungen erforderlich. Beschädigungen der Elektrodenoberfläche, wie bspw. Kratzer, Ausbruch an der Schnittkante, Umbiegen der Schnittkante etc., wie sie insbesondere bei Bürstenlösungen auftreten können, können durch das beschriebene Reinigungsverfahren und -system reduziert oder gar vermieden werden.

Darüber hinaus ist durch das vorstehend beschriebene Verfahren und System gemäß Ausführungen der Erfindung eine gezielte und schnelle Anpassung an die Elektrodengeometrie möglich, indem Einstellungen der Position der Reinigungsüberfahrt und Änderungen der Schnittgeometrie entsprechend der Elektrodengeometrie vorgenommen werden. Bei Bürstenlösungen müssten dagegen die Bürstengrößen angepasst werden, was einen mechanischen Umbau bedingt.

Zusätzlich wirkt die vorstehend beschriebene Reinigung entgratend, bei einigen Ausführungsformen wird eine abgeschrägte Schnittkante generiert. Dies kann für eine zusätzliche Kantenentlastung bei einem späteren Heißpressprozess sorgen, da beim Heißpressen ein Risiko zur Beschädigung des Separators bei einer abgeschrägten Kante geringer ist als bei einer senkrechten Kante, da eine senkrechte Kante in der Regel scharfkantiger ist als eine abgeschrägte Kante.

Bei einigen Ausführungen kann die Reinigungswirkung noch durch eine Absaugeinrichtung im Bearbeitungsbereich beim Schneiden und/oder beim Reinigen, die sich durch die jeweilige Bearbeitung lösendes Material absaugt, verbessert werden.

Bei einigen Ausführungsformen wird der Trennschnitt nicht auf einmal durchgeführt, sondern durch mehrere Teilschnitte, mit denen das Material durch wiederholtes Schneiden nach und nach geschnitten wird, bis es durchgeschnitten ist, ausgeführt. Hierbei ist es insbesondere denkbar, dass zwischen den Teilschnitten gereinigt wird.

Bei einigen Ausführungsformen wird vor dem ersten Schneidvorgang zumindest eine defokussierte Reinigungsfahrt durchgeführt, um so eine Vertiefung (wie eine Rille) zu erzeugen, in der dann anschließend der Schneidvorgang ausgeführt wird. Dies ermöglicht, dass die durch den Schneidvorgang erzeugte Materialablation sich in dieser Vertiefung ablagert - und insbesondere nicht über die Elektrodensubstratoberfläche hinausragt - und somit hier nicht entfernt werden muss. Der Schneidvorgang kann als einzelner Trennschnitt ausgeführt werden. Es ist aber auch hierbei denkbar, dass das Material durch mehrere Schneidvorgänge nach und nach durchtrennt wird. Idealerweise muss dann nach dem Schneiden gar keine Reinigung mehr durchgeführt werden. Optional kann nach dem Schneiden oder auch zwischen Teilschneidvorgängen eine Reinigung mittels Reinigungsstrahl wie oben zu einigen Ausführungen ausgeführt, durchgeführt werden.

Ausführungsbeispiele werden im Folgenden anhand der beigefügten Zeichnungen näher erläutert. Darin zeigt:

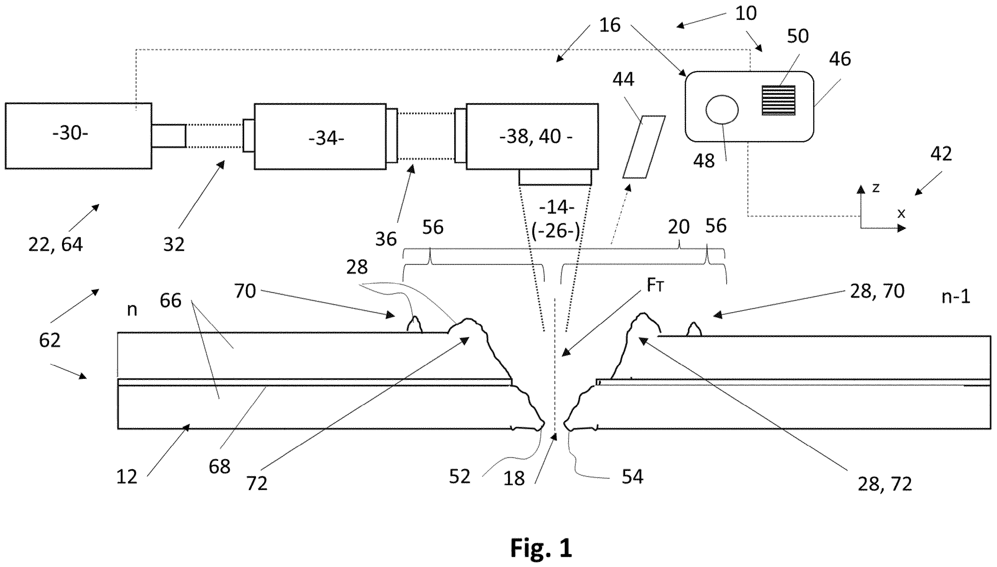

- Fig. 1: eine Seitenansicht einer Anordnung, die ein bahnförmiges Elektrodensubstrat und eine erste Ausführungsform einer mit einer Reinigungsvorrichtung versehenen Strahlschneidvorrichtung zum Schneiden des Elektrodensubstrats mittels eines Schneidstrahls nach dem Durchführen eines Schneidschritts noch ohne Reinigen zeigt;

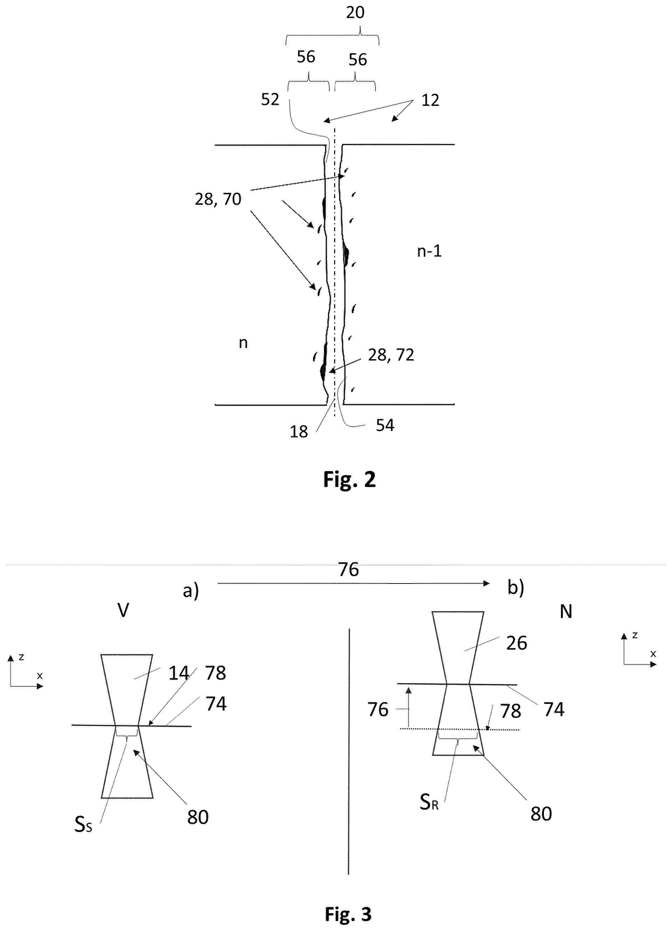

- Fig. 2: eine Draufsicht auf einen Schneidbereich mit Schnittkanten des geschnittenen Elektrodensubstrats von Fig. 1;
- Fig. 3: eine schematische Darstellung des Schneidbereichs der Anordnung von Fig. 1 bei einen Strahlschneidverfahren gemäß einer ersten Ausführungsform, wobei links ein vorher durchzuführender Schritt und rechts ein nachher durchzuführender Schritt mit Darstellung einer Fokuslage eines dabei verwendeten Strahls gezeigt ist;

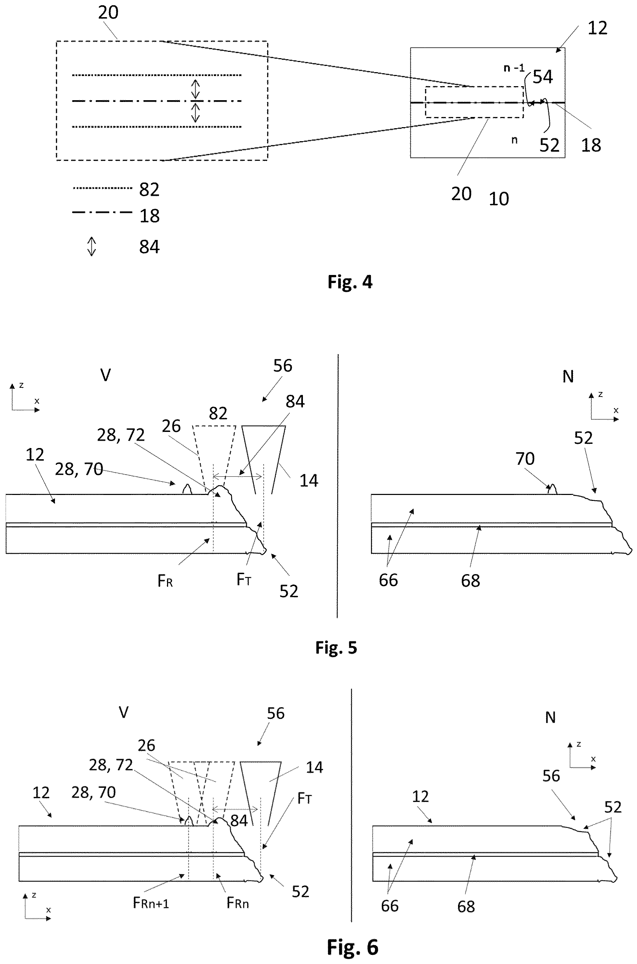

- Fig. 4: rechts eine Draufsicht auf das Elektrodensubstrat, das mit einem Strahlschneidverfahren gemäß einer zweiten Ausführungsform zu schneiden ist, um es zu einer (n-1)-ten Elektrode und einer n-ten Elektrode zu schneiden, und links eine vergrößerte Darstellung des Bereichs um eine Schnittkante;
- Fig. 5: eine schematische Darstellung eines eine Schneidkante aufweisenden Schneidkantenbereichs des Elektrodensubstrats im Verlauf eines Strahlschneidverfahrens gemäß der zweiten Ausführungsform, wobei links eine vorherige Situation mit einem Schneidschritt und einem ersten Reinigungsschritt illustriert ist und rechts eine nach dem ersten Reinigungsschritt vorliegende Situation gezeigt ist;
- Fig. 6: eine Darstellung wie in Fig. 5 zur Illustration der zweiten Ausführungsform des Strahlschneidverfahrens, wobei links eine vorherige Situation mit dem Schneidschritt und dem ersten und einem zweiten Reinigungsschritt und rechts eine nach dem zweiten Reinigungsschritt vorliegende Situation dargestellt ist;

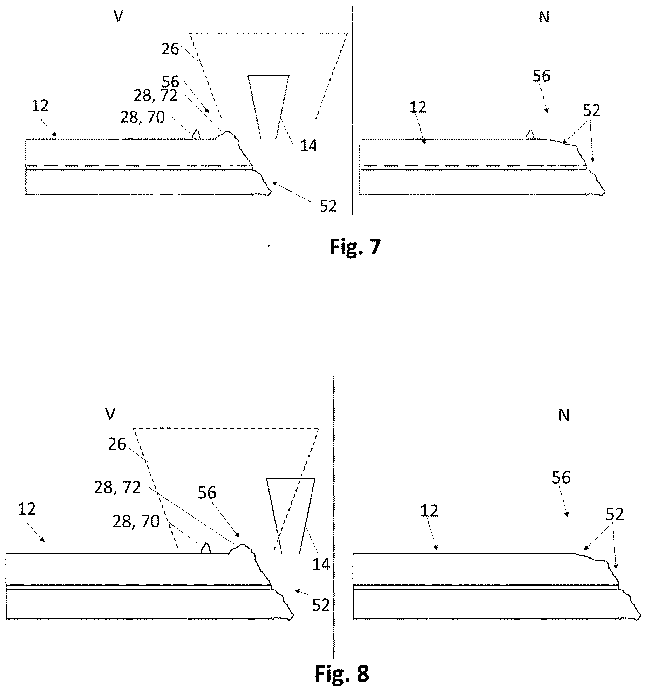

- Fig. 7: eine schematische Darstellung eines eine Schneidkante aufweisenden Schneidkantenbereichs des Elektrodensubstrats im Verlauf eines Strahlschneidverfahrens gemäß einer dritten Ausführungsform, wobei links eine vorherige Situation mit einem Schneidschritt und einem ersten Reinigungsschritt illustriert ist und rechts eine nach dem ersten Reinigungsschritt vorliegende Situation gezeigt ist;
- Fig. 8: eine Darstellung wie in Fig. 7 zur Illustration der dritten Ausführungsform des Strahlschneidverfahrens, wobei links eine vorherige Situation mit dem Schneidschritt und dem ersten und einem zweiten Reinigungsschritt und rechts eine nach dem zweiten Reinigungsschritt vorliegende Situation dargestellt ist;

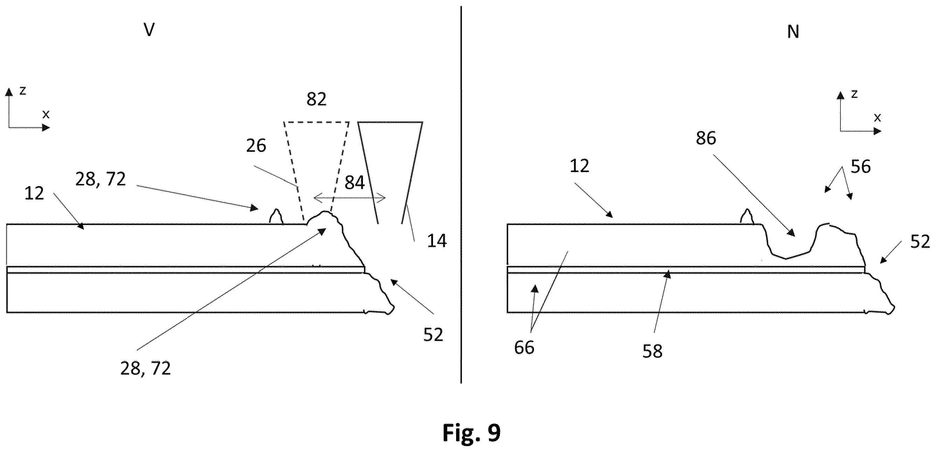

- Fig. 9: eine Darstellung wie in Fig. 5, wobei links eine vorherige Situation mit einem Schneidschritt und einem ersten Reinigungsschritt illustriert ist und rechts eine nach fehlerhafter Durchführung des ersten Reinigungsschritts mit fehlerhaft eingestelltem Reinigungsstrahl vorliegende Situation gezeigt ist;

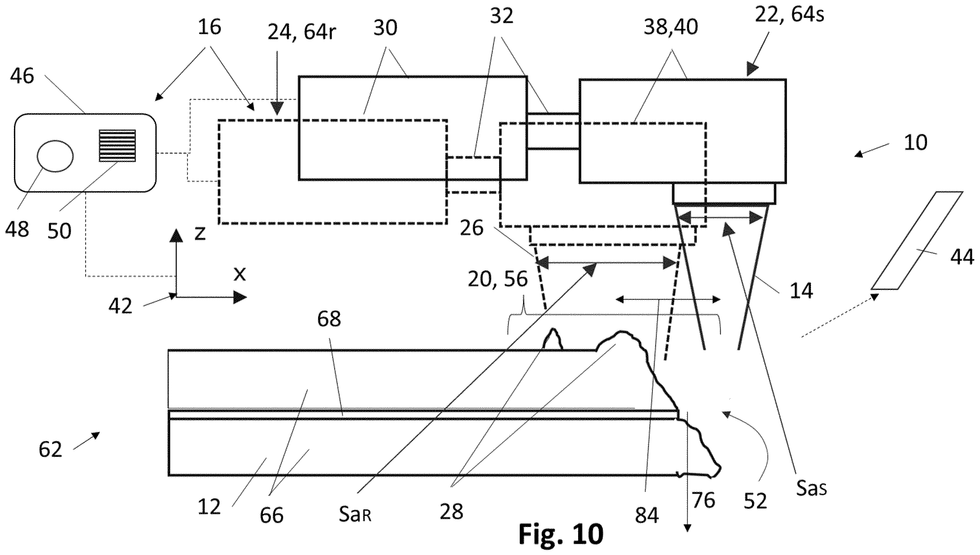

- Fig. 10: eine Seitenansicht einer Anordnung, die ein bahnförmiges Elektrodensubstrat und eine zweite Ausführungsform einer mit einer Reinigungsvorrichtung versehenen Strahlschneidvorrichtung zum Schneiden des Elektrodensubstrats mittels eines Schneidstrahls nach dem Durchführen eines Schneidschritts und zu Beginn eines Reinigungsschritts zeigt; und

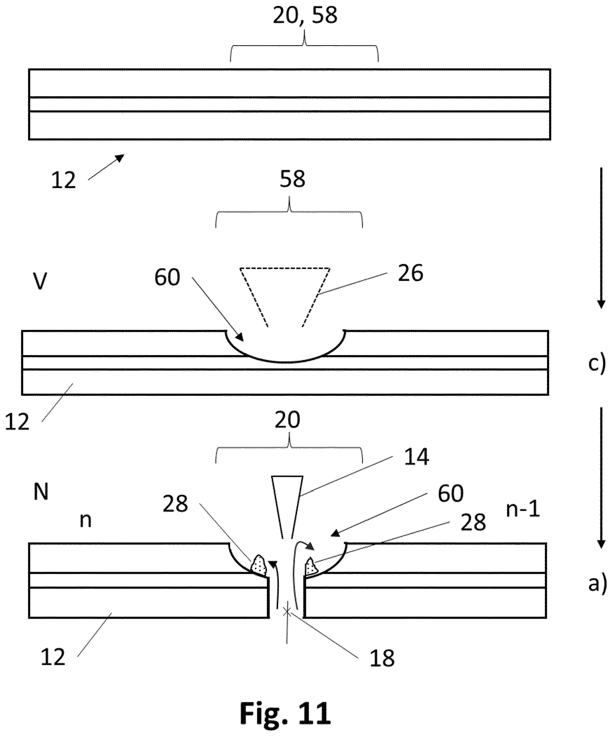

- Fig. 11: Seitenansichten eines zu schneidenden Elektrodensubstrats im Verlauf mehrerer Schritte eines Strahlschneidverfahrens gemäß einer weiteren Ausführungsform.

In den Figuren 1 und 10 sind unterschiedliche Ausführungsformen einer Strahlschneidvorrichtung 10 zum Schneiden eines Elektrodensubstrats 12 mittels eines Schneidstrahls 14 dargestellt, wobei die Strahlschneidvorrichtung 10 eine Reinigungsvorrichtung 16 zum Reinigen eines sich entlang einer Schnittlinie 18 erstreckenden Schneidbereichs 20 vor, während und/oder nach Durchführen eines Schneidvorganges an dem Elektrodensubstrat 12 aufweist.

Die Strahlschneidvorrichtung 10 weist wenigstens eine Strahlquelle 22 auf, die dazu ausgebildet ist, den zur Materialablation eingerichteten Schneidstrahl 14 über das Elektrodensubstrat zu führen, so dass durch einmaliges oder mehrfaches Abfahren einer vorbestimmten Schneidkontur (dies kann eine vorbestimmte Kurve sein, wie dies aus den Literaturstellen [1] bis [3] bekannt ist) das Elektrodensubstrat 12 entlang der dann der Schneidkontur entsprechenden Schnittlinie 18 geschnitten wird. Beispielsweise erfolgt bei einer Großserienfertigung von Batterieelektroden durch dieses Schneiden ein Auftrennen des Elektrodensubstrats in eine vorhergehende Elektrode n-1 und eine nachfolgende Elektrode n.

Auch die Reinigungsvorrichtung 12 weist wenigstens eine Strahlquelle 22, 24 auf, die dazu ausgebildet ist, einen zur Materialablation eingerichteten Reinigungsstrahl 26 über das Elektrodensubstrat 12 zu führen. Dabei ist die Strahlquelle 22, 24 der Reinigungsvorrichtung 12 dazu eingerichtet, den Reinigungsstrahl 20 derart zu erzeugen und über den Schneidbereich zu führen, dass Materialaufwurf im Schneidbereich 20 durch Materialablation gezielt entfernt oder vermieden wird.

Bei einigen Ausführungsformen, von denen ein Beispiel in Fig. 1 gezeigt ist, wird der Reinigungsstrahl 26 mit der gleichen Strahlquelle 22 erzeugt wie der Schneidstrahl 14. Die Reinigungsvorrichtung 16 ist dann integraler Bestandteil der zum Schneiden vorgesehenen Einrichtung der Strahlschneidvorrichtung 10.

Bei anderen Ausführungen, von denen ein Ausführungsbeispiel in Fig. 10 gezeigt ist, sind eine erste Strahlquelle 22 und eine zweite Strahlquelle 24 vorgesehen. Bei einigen Ausführungsformen ist dabei die erste Strahlquelle 22 zum Schneiden eingerichtet, während die zweite Strahlquelle 24 zum Reinigen eingerichtet ist. In diesem Fall ist die Reinigungseinrichtung 16 gesondert zu zum Schneiden vorgesehenen Einrichtungen der Strahlschneidvorrichtung 10 vorgesehen. Die Reinigungsvorrichtung 16 gemäß dieser Ausführung könnte auch zur Reinigung in Verbindung mit anderen Schnitttechniken, z.B. mittels Messer, verwendet werden. Die erste und die zweite Strahlquelle 24, 26 können auch wechselweise zum Schneiden und Reinigen eingesetzt werden.

Als Strahlquelle kann jede Strahlquelle eingesetzt werden, mit der ein zur Materialablation eingerichteter Strahl gezielt über das Elektrodensubstrat 12 geführt werden kann. Bei den dargestellten Ausführungsformen sind die Strahlquellen 22, 24 jeweils Laserquellen, mit denen jeweils ein Laserstrahl als Schneidstrahl 14 und als Reinigungsstrahl 24 über das Elektrodensubstrat geführt wird. Das mit den Strahlquellen durchführbare Schneid- und Reinigungsverfahren wird im Folgenden anhand dieses Beispiels unter Verwenden von Laserstrahlen erläutert.

Bei den dargestellten Ausführungsbeispielen weist jede Strahlquelle 22, 24 einen Laser 30 (gezeigt ist beispielsweise ein Isolator eines Lasers), der einen Laserstrahl 32 ohne Aufweitung erzeugt, einen optionalen Strahlaufweiter 34, der einen aufgeweiteten Laserstrahl 36 liefert, und einen Scanner 38 zum gezielten Richten eines Fokuszentrums F_{T}, F_{R}, F_{Rn}, F_{Rn+1} auf das Elektrodensubstrat 12 auf. Weiter ist - z.B. im Bereich des Scanners 38 - eine einstellbare Optik 40 zur Einstellung des Fokus vorgesehen. In den Fig. 1 und 10 ist weiter eine Relativbewegungseinrichtung 42 zur relativen Bewegung des Elektrodensubstrats 12 und der Strahlquelle 22, 24 vorgesehen. Auch können nicht näher dargestellte, aber hinlänglich bekannte Sensoren, beispielsweise kamerabasiert, zur Positionsbestimmung und/oder zur Erfassung der Konturen von Elektrodensubstrat 12 und eventuell auch von Materialaufwurf 28 vorgesehen sein.

Bei einigen Ausführungsformen ist auch eine Absaugeinrichtung 44 vorgesehen, um bei der jeweiligen Bearbeitung - Schneiden und/oder Reinigen - freigesetztes Material abzusaugen.

Die gezeigten Ausführungsformen der Strahlschneidvorrichtung 10 und der Reinigungsvorrichtung 16 weisen weiter eine Steuerung 46 mit Prozessor 48 und Speicher 50 auf, die die jeweilige Strahlquelle 22, 24, insbesondere den Scanner 38 und die Optik 40 sowie eventuell die Relativbewegungseinrichtung 42, zum Durchführen der im Folgenden näher erläuterten Verfahren ansteuert. Hierzu ist in dem Speicher 50 ein Computerprogramm mit entsprechenden Anweisungen geladen.

Bei einigen Ausführungsformen wird ein Strahlschneidverfahren durchgeführt zum Schneiden des Elektrodensubstrats, umfassend den Schritt:
a) Schneiden des Elektrodensubstrats 12 durch Führen des Schneidstrahls 14 entlang der Schnittlinie 18, um das Elektrodensubstrat 12 durch Materialablation ganz oder teilweise zu durchtrennen und so eine erste Schnittkante 52 und eine zweite Schnittkante 54 zu erzeugen.

Gemäß einer ersten Alternative, von denen Ausführungsbeispiele im Folgenden anhand der Darstellungen in den Fig. 1 bis 10 erläutert werden, umfasst das Strahlschneidverfahren den Schritt:
b) Reinigen des Elektrodensubstrats 12 durch Abfahren eines sich entlang wenigstens einer der Schneidkanten 52, 54 erstreckenden Schneidkantenbereichs 56 mittels des Reinigungsstrahls 26, der dazu ausgebildet und eingestellt ist, beim Schneiden auftretenden Materialaufwurf 28 durch Materialablation zu entfernen.

Gemäß einer zweiten Alternative, von der ein Ausführungsbeispiel weiter unten anhand der Darstellung in Fig. 11 erläutert wird, umfasst das Strahlschneidverfahren den Schritt:
c) Vorreinigen des Elektrodensubstrats 12 vor Schritt a) durch Abfahren eines sich entlang der Schnittlinie 18 erstreckenden Vorreinigungsbereichs 58 mittels des Reinigungsstrahls 26, der dazu ausgebildet und eingestellt ist, Material durch Materialablation zu entfernen, um entlang der Schnittlinie 18 eine Vertiefung 60 zu erzeugen, in der in Schritt a) das Schneiden durchgeführt wird.

Die Alternativen können bei einigen Ausführungsformen auch kumuliert vorgesehen sein, es kann also zunächst Schritt c), dann Schritt a) und anschließend Schritt b) durchgeführt werden.

Fig. 1 zeigt eine Anordnung 62 umfassend das Elektrodensubstrat 12 und ein erstes Ausführungsbeispiel der Strahlschneidvorrichtung 10, die hier ein Lasersystem 64 als Beispiel für die Strahlquelle 22 aufweist. Fig. 1 zeigt die Anordnung nach Durchführen des Schritts a), beispielsweise nach Durchführen eines vollständigen Trennschnitts, jedoch (noch) ohne Reinigung. Fig. 2 zeigt eine Draufsicht auf den Schneidbereich 20 des Elektrodensubstrats 12 mit der ersten und zweiten Schnittkante 52, 54 (noch) ohne Reinigung.

Das Elektrodensubstrat 12 weist beispielsweise Aktivmaterial 66 auf einer Trägerfolie 68 auf.

Durch das Schneiden kann Materialaufwurf 28, z.B. in Form von lose oder fest anhaftenden Partikeln 70 und/oder in Form eines Materialauftrags 72 an der jeweiligen Schnittkante 52, 54 entstehen.

In Fig. 3 ist in der linken Bildhälfte die Situation vorher und in der rechten Bildhälfte eine Situation nachher dargestellt. Links ist ein Ausführungsbeispiel für die Durchführung von Schritt a) und rechts ein Ausführungsbeispiel für die Durchführung von Schritt b) gezeigt. Dabei findet beim Übergang von a) zu b) eine Fokuslagenverschiebung statt. Bei der Ausführungsform des Schritts b), die in Fig. 3 dargestellt ist, wird demnach anschließend an den Schneidschritt a) eine Reinigungsüberfahrt mit dem Reinigungsstrahl 26 durchgeführt, wobei die Fokuslage 74 des Reinigungsstrahls 26 gegenüber der Fokuslage 74 des Schneidstrahls 14 verschoben ist. Fig. 3 veranschaulicht den Effekt der Fokuslagenverschiebung 76. Beim links dargestellten Schneidschritt a) entspricht die Fokuslage 74 der Elektrodenoberfläche 78. Bei dem rechts dargestellten Reinigungsschritt ist die Fokuslage 74 relativ zur Elektrodenoberfläche 78, hier beispielsweise nach oben, verschoben.

Durch eine Verschiebung der Fokuslage 74 kann die Größe eines Bereichs der Elektrodenoberfläche, auf die der Laserstrahl auftrifft, und somit die Intensität des auf die Elektrodenoberfläche auftreffenden Laserstrahls, verändert werden. Hier beispielhaft dargestellt, ist eine Defokussierung. In der linken Bildhälfte (Vorher V) entspricht die Fokuslage 74 der Ebene der Elektrodenoberfläche 78. Da der Laserstrahl in der Fokuslage den kleinsten Spotdurchmesser aufweist, ist der Bereich der Elektrodenoberfläche 78, auf den der Laserstrahl auftrifft - in Fig. 3 als Fläche Laser-Material-Wechselwirkung 80 gezeigt - somit am kleinsten. Durch eine Verschiebung der Fokuslage 74 weg von der Elektrodenoberfläche 78 - rechte Bildhälfte (Nachher N) - kann der Bereich der Elektrodenfläche, auf den der Laserstrahl auftrifft, vergrößert werden. So kann mit einer Reinigungsüberfahrt ein größerer Bereich abgereinigt werden, als wenn die Fokuslage 74 der Elektrodenoberfläche 78 entspricht. Alternativ, hier jedoch nicht dargestellt, ist es auch möglich, die Fokuslage 74 zur Elektrodenoberfläche 78 hin, also sozusagen in diese hinein, zu verschieben.

Die Reinigungsüberfahrten können auf unterschiedliche Weisen durchgeführt werden, von denen Beispiele in den Fig. 6 bis 9 gezeigt sind.

Bei einigen Ausführungsformen, von denen Beispiele in den Fig. 4 bis 6 dargestellt sind, werden eine oder mehrere Reinigungsfahrten mit einem Versatz relativ zu der Schneidüberfahrt durchgeführt. Mit anderen Worten sind die Reinigungsfahrten versetzt zur Schneidüberfahrt und/oder zu dem Trennschnitt oder der Schnittlinie 18.

Fig. 4 zeigt eine schematische Darstellung für eine versetzte Reinigungsfahrt von oben. Genauer zeigt Fig. 4 rechts in einer Übersichtsdarstellung und links in einer Detaildarstellung eine Draufsicht auf das Elektrodensubstrat 12 mit einem Schnittlayout zwischen zwei Schnittkanten 52, 54. Die gepunktete Linie zeigt dabei den Verlauf der Reinigungsüberfahrt 82, die strichpunktierte Linie zeigt die Schnittlinie 18 und damit den Trennschnitt, die Doppelpfeile zeigen den Versatz 84. n-1 bezeichnet die n-1-te Elektrode und n die n-te Elektrode und somit zwei Elektroden, die durch den Trennschnitt voneinander getrennt werden.

Fig. 5 zeigt eine Seitenansicht des Schneidkantenbereichs 56 an einer der Schnittkanten 52 des Elektrodensubstrats 12, wobei in der linken Bildhälfte (Vorher V) die Durchführung der Schneidüberfahrt mit dem Schneidstrahl 14 und die Durchführung einer einfachen Reinigungsüberfahrt 82 mit einem gegenüber dem Schneidstrahl 14 versetzten Reinigungsstrahl 26 dargestellt ist und in der rechten Bildhälfte (Nachher N) der Schnittkantenbereich 56 nach dieser Reinigungsüberfahrt 82 gezeigt ist. Es ist somit die Schnittkante 52 mit einfacher versetzter Reinigungsfahrt 82 vorher und nachher in Seitenansicht dargestellt. F_{T} bezeichnet die Lage des Fokuszentrums des Trennschnitts und F_{R} die Lage des Fokuszentrum der Reinigung. Wie man der rechten Bildhälfte von Fig. 5 entnehmen kann, ist der Materialauftrag 72 nach der Reinigung von der Schnittkante 52 entfernt, die Schnittkante 52 ist entgratet und zusätzlich gleichmäßiger abgeschrägt.

Fig. 6 zeigt eine Seitenansicht wie in Fig. 5, wobei allerdings eine mehrfache Reinigungsüberfahrt 82.n, 82.n+1 mit mehrfacher Versetzung dargestellt ist. Fig. 6 zeigt demnach den Schnittkantenbereich 56 der Schnittkante 52 mit versetzter mehrfacher Reinigungsüberfahrt 82.n, 82.n+1, wobei in der linken Bildhälfte (Vorher V) die Durchführung des Trennschnitts mit Schneidüberfahrt mittels des Schneidstrahls 14 und eine n-te und eine n+1-te Reinigung mit mehrfacher Versetzung des Reinigungsstrahls 26 und in der rechten Bildhälfte (Nachher N) der Schnittkantenbereich 56 nach Durchführung dieser mehrfachen Reinigungsüberfahrt 82.n, 82.n+1 gezeigt ist.

Fig. 4 zeigt demnach ein Schnittlayout zwischen zwei Schnittkanten 52, 54, hier beispielhaft mit zwei symmetrisch zueinander versetzten Reinigungsüberfahrten im Bezug zum Trennschnitt. Fig. 5 zeigt eine einfache Reinigungsüberfahrt 82, wie sie im Schnittkantenbereich 56 einer jeder dieser Schnittkanten 52, 54 durchgeführt wird, am Beispiel der ersten Schnittkante 52. Fig. 6 zeigt eine mehrfache Reinigungsüberfahrt 82.n, 82.n+1, wie sie bei weiteren Ausführungsformen im Schnittkantenbereich 56 einer jeder dieser Schnittkanten 52, 54 durchgeführt wird, ebenfalls nur am Beispiel der ersten Schnittkante 52.

Gemäß Fig. 5 erfolgt ein Abtrag des Materialauftrags 72 direkt an der Schnittkante 52 durch eine versetzte Reinigungsüberfahrt 82, weiter entfernte Partikel 70 werden nicht entfernt. Ein weiteres Versetzen der Reinigungsüberfahrt 82, 82.n, 82.n+1 kann auch die weiter entfernten Partikel 70 abreinigen, wie dies in Fig. 6 gezeigt ist.

"Versetzte Reinigungsfahrt" bedeutet hier, dass das Fokuszentrum F_{R}, F_{Rn}, F_{Rn+1} des Lasers zur Reinigung gegenüber dem Fokuszentrum F_{T} des Lasers zum Trennen/Vereinzeln der Elektroden verschoben/versetzt ist.

Gemäß einigen Ausführungsformen, von denen ein Beispiel in Fig. 7 gezeigt ist, wird der Schritt b) des Reinigens mittels eines Reinigungsstrahls 26 durch Materialablation unter Verschiebung der Fokuslage 74 ohne Versatz durchgeführt. Fig. 7 zeigt in der linken Bildhälfte (Vorher V) beispielhaft den Schnittkantenbereich 56 der ersten Schnittkante 52 (die Durchführung erfolgt an der anderen Schnittkante 54 analog) unter Andeutung des Trennschnitts mit Schneidstrahl 14 und der Reinigung mit Reinigungsstrahl 26, deren Fokuslagen verschoben sind. In der rechten Bildhälfte (Nachher N) ist der Schnittkantenbereich 56 nach dieser Reinigung gezeigt.

Eine Verschiebung der Fokuslage 74 hat zur Folge, dass sich die Lage des Fokus (kleinstmöglichster Spot) in Bezug auf die Oberfläche 78 der Elektrode verändert.

Beispielhaft wie in Fig. 7 und in Fig. 3 dargestellt, erfolgt der Trennschnitt mit auf die Elektrodenoberfläche 78 eingestellter Fokuslage 74. Der Trennschnitt erfolgt also mit dem kleinstmöglichen Spot, da so die Intensität des auf die Elektrodenoberfläche auftreffenden Laserstrahls am größten ist. Wird die Fokuslage 74 von der Oberseite der Elektrode nach unten verschoben, vergrößert sich der Laserspot, der auf die Oberfläche 78 der Elektrode trifft. Dadurch wird die Intensität des auf die Elektrodenoberfläche auftreffenden Laserstrahls reduziert und es kann ein breiter Bereich gereinigt werden und so kann wie in Fig. 7 dargestellt der an der Schnittkante 52 entstehende Materialauftrag 72 entfernt werden.

Bei einigen Ausführungsformen, von denen ein Beispiel in Fig. 8 dargestellt ist, wird der Schritt b) des Reinigens mittels des Reinigungsstrahls 26 durch Materialablation unter Verschiebung der Fokuslage 74 mit Versatz durchgeführt. Eine solche Vorgehensweise entspricht einer Kombination einer der anhand der Fig. 3 und 7 erläuterten Verfahrensweisen mit einer der anhand der Fig. 4 bis 6 erläuterten Verfahrensweisen.

Zur Reinigung werden eine oder mehrere Reinigungsfahrten 82, 82.n, 82.n+1 mit dem Reinigungsstrahl 26 durchgeführt, wobei die Reinigungsfahrten 82.n, 82.n+1 relativ zu der Schneidüberfahrt senkrecht zur Schnittkante 52 versetzt und mit nach oben oder nach unten verschobener Fokuslage 74 durchgeführt werden.

Fig. 8 zeigt den Schnittkantenbereich 56 in der linken Bildhälfte (Vorher V) wiederum mit Andeutung von Trennschnitt und Reinigung und in der rechten Bildhälfte (Nachher N) nach erfolgter Reinigung. Es gibt somit einen Versatz der Reinigungsüberfahrt 82 und eine Fokuslagenverschiebung 76 aus der Elektrodenoberfläche heraus. Auch weiter entfernter Materialaufwurf 28 - wie z.B. ein weiter entfernter Partikel 70 - kann so entfernt werden.

Eine passende Einstellung der Strahlquelle 22, 24, die zu einem wirksamen Reinigungsstrahl 26 führt, kann der Fachmann leicht anhand von Versuchen ermitteln. Die Einstellung wird optimalerweise so vorgenommen, dass Materialaufwurf 28, insbesondere Materialauftrag 72 an der Schnittkante 52, 54 und gegebenenfalls Partikel 70, entfernt wird und der Schneidkantenbereich 56 möglichst gleichmäßig abgeschrägt wird, ansonsten aber das Elektrodenmaterial 66, 68 möglichst unbeeinflusst bleibt.

Fig. 9 zeigt ein Beispiel für eine falsch eingestellte Reinigungsfahrt. Dabei sind wiederum in der linken Bildhälfte (Vorher V) die Durchführung von Schritt a) und b) an einem der Schneidkantenbereiche 56 an der Schnittkante 52 angedeutet, und in der rechten Bildhälfte (Nachher N) ist der Schneidkantenbereich 56 nach Durchführung der falsch eingestellten Reinigungsfahrt 82 gezeigt.

Sind die Parameter - z.B. Laserleistung, Scangeschwindigkeit, also insbesondere die Bewegungsgeschwindigkeit des Lasers über die Oberfläche, Pulswiederholfrequenz, Pulsenergie (bei gepulsten Lasern) - zur Reinigungsüberfahrt 82 falsch eingestellt, kann es zur Delamination, d.h. Ablösen der Beschichtung - Aktivmaterial 66 - von der Trägerfolie 68, oder der Bildung einer weiteren, zumindest teilweisen Schnittkante 86 kommen. Im letzteren Fall ist die Lasereindringtiefe zu groß; nicht nur Materialaufwurf 28 wird abgetragen, sondern auch (zu viel) Aktivmaterial 66.

Wie oben bereits erwähnt, werden bei einigen Ausführungsformen, von denen ein Beispiel in Fig. 10 gezeigt ist, der Schneidstrahl 14 und der Reinigungsstrahl 26 durch unterschiedliche Strahlquellen 22, 24 erzeugt.

Fig. 10 zeigt eine weitere Ausführung der Anordnung 62 aus zu schneidendem Elektrodensubstrat 12 und der Strahlschneidvorrichtung 10, wobei als zweite Strahlquelle 24 zusätzlich zu dem als erste Strahlquelle 22 zum Abstrahlen des Schneidstrahls 12 verwendeten Lasersystems 64s ein zusätzliches Lasersystem 64r eingebaut ist. Beispielsweise erfolgt ein Einbau des zusätzlichen Lasersystems mit größerem Spotdurchmesser und/oder mit veränderter Fokuslage 74. Zusätzlich ermöglicht das zusätzliche Lasersystem 64r es, die Parameter des Laserstrahls, insbesondere Intensität, Fokuslagendurchmesser, Laserstrahlfrequenz, Pulswiederholfrequenz, etc., auf die Erfordernisse für die Reinigung möglichst optimal auszuwählen bzw. einzustellen.

Das heißt, für die Entfernung des Materialaufwurfs 28 kann, zusätzlich zum Lasersystem für den Trennschnitt, auch ein zweites Lasersystem, insbesondere mit größerem resultierenden Spotdurchmesser (entweder durch direkte Einstellung des Spotdurchmessers oder durch Verändern der Fokuslage bei gleichem Spotdurchmesser) für die Reinigung eingebaut werden. In Fig. 10 sind hierzu beispielhaft ein Strahlaustrittsdurchmesser Sa_{S} des Schneidstrahls 14 für das Schneiden und ein Strahlaustrittsdurchmesser Sa_{R} des Reinigungsstrahls 26 für das Reinigen angegeben, um entsprechende unterschiedliche Spotdurchmesser zu illustrieren.

Im Prozess wird dann zunächst der Trennschnitt - Schritt a) - mit dem ersten Lasersystem 64s - Beispiel für erste Strahlquelle 22 - durchgeführt. Anschließend erfolgt die Entfernung des Materialaufwurfs 28 mit dem zweiten Lasersystem 64r - Beispiel für zweite Strahlquelle 24 - mit größerem Spotdurchmesser S_{R} (Reinigungsüberfahrt). Die Reinigungsüberfahrt kann dann entweder
(1) Parallel verschoben zum Trennschnitt erfolgen (Vergleiche wie oben zu Fig. 4 bis 6 erläutert) oder
(2) an derselben Stelle wie der Trennschnitt (Vergleiche wie oben zu Fig. 7 erläutert) durchgeführt werden.

Mit der Ausführung von Fig. 10 können die Schritte a) und b) oder auch c) und a) auch zeitlich überlappend durchgeführt werden. Während zum Beispiel mittels der ersten Strahlquelle 22 noch an anderer Stelle der Schnittlinie 18 geschnitten wird, kann am bereits geschnittenen Teil der Schnittlinie 18 bereits mittels der zweiten Strahlquelle 24 gereinigt werden. Auch kann während die eine Strahlquelle 22, 24 noch eine Bearbeitung durchführt, die andere Strahlquelle 24, 22 bereits für die nächste Bearbeitung eingestellt oder positioniert werden.

Der Schneidstrahl 14 kann auch wechselweise von der zweiten Strahlquelle 24 erzeugt werden, und der Reinigungsstrahl 26 von der ersten Strahlquelle 22. Man kann bei dieser Ausführung auch die Strahlquellen 22, 24 derart betreiben, dass in einem vorherigen Schneidprozess die erste Strahlquelle 22 den Schneidstrahl 14 erzeugt und die zweite Strahlquelle 24 den Reinigungsstrahl und dann in einem nachfolgenden Schneidprozess die zweite Strahlquelle 24 den Schneidstrahl 14 erzeugt und die erste Strahlquelle 22 den Reinigungsstrahl 26. Der Betrieb wird idealerweise im Hinblick auf die kürzest erreichbare Gesamtzeit für Schneiden und Reinigen ausgewählt und eingestellt.

Anstelle eines eigenen Lasers für jedes Lasersystem ist bei Varianten der Ausführung von Fig. 10 ein gemeinsamer Laser vorgesehen, dessen Strahl durch ein Strahlformungssystem in einen ersten Laserstrahl 32 des ersten Lasersystems 64s und einen zweiten Laserstrahl 32 des zweiten Lasersystems 64r aufgeteilt wird, wobei die Laserstrahlen dann durch die Optiken 40 und Scanner 38 der Lasersysteme 64r, 64s unterschiedlich einstellbar und positionierbar sind.

Im Folgenden wird ein Ausführungsbeispiel für die oben bereits erwähnte zweite Alternative des Schneidverfahrens anhand von Fig. 11 erläutert. In Fig. 11 ist das zu schneidende Elektrodensubstrat 12 in mehreren Teilschritten des Schneidverfahrens gemäß einem Ausführungsbeispiel für die zweite Alternative dargestellt, worin vor dem Schneiden gemäß Schritt a) der Schritt c) des Vorreinigens mittels des Reinigungsstrahls 26 durchgeführt wird. Fig. 11 zeigt oben das noch ungeschnittene Elektrodensubtrat 12, in der Mitte das Elektrodensubstrat 12 beim Durchführen von Schritt c) und unten das Elektrodensubstrat beim anschließenden Durchführen von Schritt a). In Schritt c) wird der Reinigungsstrahl 26 noch vor dem Schneiden entlang der Schnittlinie 18 verfahren, um einen Vorreinigungsbereich 58 vorzureinigen und die Vertiefung 60 zu erzeugen. Die Vertiefung 60 kann beispielsweise als eine Art Rille, Rinne oder Nut erzeugt werden, die von der Oberfläche der Elektrode zurückversetzt ist. Anschließend wird in Schritt a) der Schneidstrahl 14 entlang der Schnittlinie 18 in dieser Vertiefung 60 verfahren. Dabei entstehender Materialaufwurf 28, wie Materialauftrag 72 an der Schnittkante 52, 54 oder Partikel 70 lagern sich idealerweise innerhalb der Vertiefung 60 ab.

Idealerweise ist anschließend an Schritt a) dann keine weitere Reinigung notwendig. Bei einigen Ausführungsformen der zweiten Alternative kann aber auch anschließend an Schritt a) noch der Schritt b) gemäß einer der oben erläuterten Ausgestaltungen durchgeführt werden.

Um die Herstellung von Elektroden in Großserienfertigung hinsichtlich Aufwand, Qualität, Zuverlässigkeit und Geschwindigkeit zu verbessern, ist ein Strahlschneidverfahren zum Schneiden eines Elektrodensubstrats (12) vorgeschlagen worden, das den Schritt umfasst:
a) Schneiden des Elektrodensubstrats (12) durch Führen eines Schneidstrahls (14) entlang einer Schnittlinie (18), um das Elektrodensubstrat (12) durch Materialablation ganz oder teilweise zu durchtrennen und so eine erste und zweite Schnittkante (52, 54) zu erzeugen, wobei das Strahlschneidverfahren weiter wenigstens einen der Schritte umfasst:
b) Reinigen des Elektrodensubstrats (12) durch Abfahren eines sich entlang wenigstens einer der Schneidkanten (52, 54) erstreckenden Schneidkantenbereichs (56) mittels eines Reinigungsstrahls (26), der dazu ausgebildet und eingestellt ist, beim Schneiden auftretenden Materialaufwurf (28) durch Materialablation zu entfernen, und/oder
c) Vorreinigen des Elektrodensubstrats (12) vor Schritt a) durch Abfahren eines sich entlang der Schnittlinie (18) erstreckenden Vorreinigungsbereichs (58) mittels des Reinigungsstrahls (26), der dazu ausgebildet und eingestellt ist, Material durch Materialablation zu entfernen, um entlang der Schnittlinie (18) eine Vertiefung (60) zu erzeugen, in der in Schritt a) das Schneiden durchgeführt wird.

Das Strahlschneidverfahren wird vorzugsweise als Teil eines Batterieelektrodenherstellverfahrens durchgeführt, mittels dem Elektroden für Batteriezellen bzw. Batterien in Großserienfertigung hergestellt werden. Weitere Einzelheiten dieses Batterieelektrodenherstellverfahrens können bspw. so ausgestaltet sein, wie dies in den Literaturstellen [1] bis [3] beschrieben ist.

Weiter sind eine Reinigungsvorrichtung 16 zum Durchführen eines oder beider der Schritte b) oder c) sowie eine Strahlschneidvorrichtung 10 zum Durchführen des Strahlschneidverfahrens beschrieben worden.

### Bezugszeichenliste:

- 10: Strahlschneidvorrichtung
- 12: Elektrodensubstrat
- 14: Schneidstrahl
- 16: Reinigungsvorrichtung
- 18: Schnittlinie
- 20: Schneidbereich
- 22: erste Strahlquelle
- 24: zweite Strahlquelle
- 26: Reinigungsstrahl
- 28: Materialaufwurf
- 30: Laser
- 32: Laserstrahl (ohne Aufweitung)
- 34: Strahlaufweiter (optional)
- 36: Laserstrahl (aufgeweitet)
- 38: Scanner
- 40: Optik
- 42: Relativbewegungseinrichtung
- 44: Absaugeinrichtung
- 46: Steuerung
- 48: Prozessor
- 50: Speicher
- 52: erste Schnittkante
- 54: zweite Schnittkante
- 56: Schneidkantenbereich
- 58: Vorreinigungsbereich
- 60: Vertiefung
- 62: Anordnung
- 64: Lasersystem
- 64s: Lasersystem Schneiden
- 64r: Lasersystem Reinigen (Beispiel für separate Reinigungsvorrichtung 16)
- 66: Aktivmaterial
- 68: Trägerfolie
- 70: Partikel
- 72: Materialauftrag an der Schnittkante
- 74: Fokuslage
- 76: Fokuslagenverschiebung
- 78: Elektrodenoberfläche
- 80: Fläche Laser-Material-Wechselwirkung
- 82: Reinigungsüberfahrt

- 82.n: n-te Reinigung
- 82.n+1: n+1-te Reinigung
- 84: Versatz
- 86: weitere Schnittkante
- F_{T}: Fokuszentrum Trennschnitt
- F_{R}: Fokuszentrum Reinigung
- F_{Rn}: Fokuszentrum n-te Reinigung
- F_{Rn+1}: Fokuszentrum n+1-te Reinigung
- S_{R}: Spotdurchmesser (Fokusdurchmesser) Reinigung
- Sa_{R}: Strahlaustrittsdurchmesser Reinigung
- S_{S}: Spotdurchmesser (Fokusdurchmesser) Schneiden
- Sa_{S}: Spotdurchmesser (Fokusdurchmesser) Schneiden
- V: Vorher
- N: Nachher

## Patentansprüche

1. Strahlschneidverfahren zum Schneiden eines Elektrodensubstrats (12), umfassend den Schritt:
a) Schneiden des Elektrodensubstrats (12) durch Führen eines Schneidstrahls (14) entlang einer Schnittlinie (18), um das Elektrodensubstrat (12) durch Materialablation ganz oder teilweise zu durchtrennen und so eine erste und zweite Schnittkante (52, 54) zu erzeugen, sowie wenigstens einen oder beide der folgenden Schritte:
b) Reinigen des Elektrodensubstrats (12) durch Abfahren eines sich entlang wenigstens einer der Schneidkanten (52, 54) erstreckenden Schneidkantenbereichs (56) mittels eines Reinigungsstrahls (26), der dazu ausgebildet und eingestellt ist, beim Schneiden auftretenden Materialaufwurf (28) durch Materialablation zu entfernen; und/oder
c) Vorreinigen des Elektrodensubstrats (12) vor Schritt a) durch Abfahren eines sich entlang der Schnittlinie (18) erstreckenden Vorreinigungsbereichs (58) mittels des Reinigungsstrahls (26), der dazu ausgebildet und eingestellt ist, Material durch Materialablation zu entfernen, um entlang der Schnittlinie (18) eine Vertiefung (60) zu erzeugen, in der in Schritt a) das Schneiden durchgeführt wird.

2. Strahlschneidverfahren nach Anspruch 1, **dadurch gekennzeichnet**,
2.1 dass der Schneidstrahl (14) und/oder der Reinigungsstrahl (26) mittels zumindest eines Lasers (30) erzeugt werden und/oder
2.2 dass das Führen und/oder das Abfahren mittels eines oder mehrerer Scanner (38) erfolgen.

3. Strahlschneidverfahren nach einem der voranstehenden Ansprüche, **dadurch gekennzeichnet**,
3.1 dass der Schneidstrahl (14) und der Reinigungsstrahl (26) mittels derselben Strahlquelle (22) erzeugt werden oder
3.2 dass der Schneidstrahl (14) mittels einer ersten Strahlquelle (22) erzeugt wird und der Reinigungsstrahl (26) mit einer zweiten Strahlquelle (24) erzeugt wird oder
3.3 dass wenigstens eine erste Strahlquelle (22) und eine zweite Strahlquelle (24) derart betrieben werden, dass die erste und zweite Strahlquelle (22, 24) wechselweise den Schneidstrahl (14) und den Reinigungsstrahl (26) erzeugen.

4. Strahlschneidverfahren nach Anspruch 3, Alternativen 3.2 oder 3.3, **dadurch gekennzeichnet**,
4.1 dass in der Zeit, in der Schritt a) mit der ersten Strahlquelle (22) durchgeführt wird, die zweite Strahlquelle (24) zum Durchführen von Schritt b) eingestellt und/oder positioniert wird oder
4.2 dass die Schritte a) und b) zeitlich überlappend durchgeführt werden und/oder
4.3 dass in der Zeit, in der Schritt c) mit der zweiten Strahlquelle (24) durchgeführt wird, die erste Strahlquelle (22) zum Durchführen von Schritt a) eingestellt und/oder positioniert wird oder
4.4 dass die Schritte c) und a) zeitlich überlappend durchgeführt werden.

5. Strahlschneidverfahren nach einem der voranstehenden Ansprüche, **dadurch gekennzeichnet, dass** Schritt b) wenigstens einen der Schritte enthält:
b1) Führen des Reinigungsstrahls (26) versetzt zu der wenigstens einen Schneidkante (52, 54), entlang der sich der Schneidkantenbereich (56) erstreckt;
b2) Richten des Reinigungsstrahls (26) auf den Schneidkantenbereich (56) mit einer Fokuslage (74), die relativ zu der Fokuslage (74) des Schneidstrahls (14) in Strahlrichtung verschoben ist;
b3) mehrfaches Überfahren des Schneidkantenbereichs (56) mit dem Reinigungsstrahl (26); und/oder
dass Schritt c) wenigstens einen der Schritte enthält:
c1) Führen des Reinigungsstrahls (26) entlang der Schnittlinie (18);
c2) Richten des Reinigungsstrahls (26) auf den Vorreinigungsbereich (58) mit einer Fokuslage (74), die relativ zu der Fokuslage (74) des Schneidstrahls (14) in Strahlrichtung verschoben ist;
c3) mehrfaches Überfahren des Vorreinigungsbereichs (58) mit dem Reinigungsstrahl (26).

6. Strahlschneidverfahren nach einem der voranstehenden Ansprüche, **dadurch gekennzeichnet,**
**dass** Schritt b) wenigstens einen oder mehrere der folgenden Schritte enthält:
b4) Abfahren eines mit Aktivmaterial (66) beschichteten Bereichs des Elektrodensubstrats (12);
b5) Abfahren eines unbeschichteten Trägerfolienbereichs des Elektrodensubstrats (12);
b6) Durchführen der Reinigung ohne nachgelagerte Reinigungseinheiten und/oder ohne zusätzliche Reinigungsschritte und/oder ohne mechanische Reinigungseinheiten oder
Reinigungsbürsten; und/oder
**dass** Schritt c) wenigstens einen oder mehrere der folgenden Schritte enthält:
c4) Abfahren eines mit Aktivmaterial (66) beschichteten Bereichs des Elektrodensubstrats (12);
c5) Abfahren eines unbeschichteten Trägerfolienbereichs des Elektrodensubstrats (12);
c6) Durchführen der Vorreinigung ohne nachgelagerte Reinigungseinheiten und/oder ohne zusätzliche Reinigungsschritte und/oder ohne mechanische Reinigungseinheiten oder Reinigungsbürsten.

7. Strahlschneidverfahren nach einem der voranstehenden Ansprüche, **dadurch gekennzeichnet,**
**dass** Schritt b) wenigstens einen oder mehrere der Schritte enthält:
b7) Entgraten des Schneidkantenbereichs (56);
b8) Erzeugen einer abgeschrägten Schneidkante (52, 54); und/oder
**dass** Schritt c) wenigstens einen oder mehrere der Schritte enthält:
c7) Erzeugen einer abgerundeten Rille als Vertiefung (60);
c8) Erzeugen einer Rille mit abgeschrägten Seitenwänden als Vertiefung (60).

8. Batterieelektrodenherstellverfahren zum Herstellen von Elektroden (n, n+1) für Batterien, umfassend
8.1 Bereitstellen eines Elektrodensubstrats (12) und
8.2 Vereinzeln der Elektroden (n, n+1) von dem Elektrodensubstrat (12) durch das Strahlschneidverfahren nach einem der voranstehenden Ansprüche.

9. Reinigungsvorrichtung (16) zum Reinigen eines sich entlang einer Schnittlinie (18) erstreckenden Schneidbereichs (20) vor, während und/oder nach Durchführen eines Schneidvorganges an einem Elektrodensubstrat (12), umfassend
wenigstens eine Strahlquelle (22, 24), die dazu eingerichtet ist, einen Reinigungsstrahl (26) derart über den Schneidbereich (20) zu führen, dass Materialaufwurf (28) im Schneidbereich (20) durch Materialablation gezielt entfernt oder vermieden wird.

10. Reinigungsvorrichtung (16) nach Anspruch 9, **dadurch gekennzeichnet**,
10.1 dass die Strahlquelle (22, 24) einen Laser (30) oder Laserscanner (38) umfasst und/oder
10.2 dass die Strahlquelle (22, 24) ein Strahlformungssystem (34, 38, 40) aufweist, mittels dem die Energie des Strahls (14, 26, 32, 36) pro Flächeneinheit einstellbar ist; und/oder
10.3 dass eine Steuerung (46) vorgesehen ist, die dazu eingerichtet ist, die Strahlquelle (22, 24) zum Durchführen von Schritt b) und/oder von Schritt c) des Schneidverfahrens nach einem der Ansprüche 1 bis 7 zu steuern.

11. Strahlschneidvorrichtung (10) zum Schneiden eines Elektrodensubstrats (12) mittels eines Schneidstrahls (14), umfassend:
wenigstens eine Strahlquelle (22, 24), die dazu ausgebildet ist, einen zur Materialablation eingerichteten Strahl (14, 26, 32, 36) über das Elektrodensubstrat (12) zu führen, und
eine Steuerung (46), die dazu eingerichtet ist, die wenigstens eine Strahlquelle (22, 24) zum Durchführen des Strahlschneidverfahrens nach einem der Ansprüche 1 bis 7 zu steuern.

12. Strahlschneidvorrichtung (10) nach Anspruch 11, **gekennzeichnet durch** eine Reinigungsvorrichtung (16) nach einem der Ansprüche 9 oder 10.

13. Strahlschneidvorrichtung (10) nach einem der Ansprüche 11 oder 12, **dadurch gekennzeichnet**,
13.1 dass eine erste und eine zweite Strahlquelle (22, 24) vorgesehen sind, die unabhängig voneinander einstellbar und steuerbar sind; und/oder
13.2 dass ein Strahlformungssystem (34, 38, 40) vorgesehen ist, das dazu eingerichtet ist, einen in das Strahlformungssystem (34, 38, 40) eingeleiteten Strahl in zwei oder mehr Strahlen zur Materialablation aufzuteilen, die in ihren Parametern, in der Fokuslage (74), dem Fokusdurchmesser (S_{R}, S_{S}) und/oder deren Strahlrichtung unabhängig voneinander einstellbar sind.

14. Reinigungsvorrichtung (16) nach einem der Ansprüche 9 oder 10 oder Strahlschneidvorrichtung (10) nach einem der Ansprüche 11 bis 13, **gekennzeichnet durch** eine Absaugeinrichtung (44), die zum Absaugen von sich beim Reinigen oder Schneiden lösenden Materials eingerichtet ist.

15. Computerprogramm, umfassend Anweisungen, die eine Strahlschneidvorrichtung (10) nach einem der Ansprüche 11 bis 14 dazu veranlasst, das Strahlschneidverfahren nach einem der Ansprüche 1 bis 7 durchzuführen.
